(19) Europäisches Patentamt
European Patent Office
Office européen des brevets

(11) EP 3 965 545 B1

(12) # EUROPÄISCHE PATENTSCHRIFT

(45) Veröffentlichungstag und Bekanntmachung des Hinweises auf die Patenterteilung:
**10.08.2022 Patentblatt 2022/32**

(21) Anmeldenummer: **20720093.2**

(22) Anmeldetag: **27.04.2020**

(51) Internationale Patentklassifikation (IPC):
***A01N 25/34*** *(2006.01)* ***C09D 183/12*** *(2006.01)*
***C08G 77/46*** *(2006.01)*

(52) Gemeinsame Patentklassifikation (CPC):
**A01N 25/34; C09D 183/12;** C08G 77/46

(86) Internationale Anmeldenummer:
**PCT/EP2020/061589**

(87) Internationale Veröffentlichungsnummer:
**WO 2020/225003 (12.11.2020 Gazette 2020/46)**

(54) **POLYETHERMODIFIZIERTE SILOXANE ALS STAUBBINDEMITTEL FÜR SAATGUT**

POLYETHER-MODIFIED SILOXANES AS DUST BINDING AGENT FOR SEEDS

SILOXANE MODIFIÉ PAR POLYÉTHER EN TANT QU'AGENT LIANT LA POUSSIÈRE POUR SEMENCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2019 EP 19173220**

(43) Veröffentlichungstag der Anmeldung:
**16.03.2022 Patentblatt 2022/11**

(60) Teilanmeldung:
**22178066.1**

(73) Patentinhaber: **Evonik Operations GmbH**
**45128 Essen (DE)**

(72) Erfinder:
- **HÄNSEL, René**
  **46282 Dorsten (DE)**
- **RIEDL, Carsten**
  **44809 Bochum (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 1 439 200** **WO-A1-02/058454**
**WO-A1-2012/168210** **WO-A1-2013/158284**
**WO-A1-2016/149023** **US-A- 3 649 321**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 965 545 B1

## Beschreibung

Gegenstand der vorliegenden Erfindung ist die Verwendung von polyethermodifizierten Siloxanen als Staubbindemittel für Saatgut sowie Verfahren zur Verringerung der Staubentwicklung von Saatgut unter Verwendung von polyethermodifizierten Siloxanen.

Saatgut wird vor dem Aussäen gebeizt. Unter Saatgut werden trockene, ruhende, generative Fortpflanzungsorgane wie Samen, Früchte, Scheinfrüchte, Fruchtstände oder Teile davon verstanden. Diese enthalten die Keimanlagen der Pflanzen. Als Beizen oder Beizung oder Saatgutbeizung wird in der Land- und Forstwirtschaft sowie im Landschafts- und Gartenbau die Behandlung von Saatgut mit Pflanzenschutzmitteln und gegebenenfalls zusätzlich Nährstoffen, um die Saat gegen Pilzbefall und vor Schädlingen zu schützen, bezeichnet. Das Saatgut ist nach der Beizung mit einer festen, trockenen und möglichst homogenen Schicht ummantelt. Diese Ummantelung ist meist farbig, um zu kennzeichnen, dass das Saatgut behandelt ist. Die Färbung soll die versehentliche Verwendung des gebeizten Saatguts als Futter oder zu Nahrungszwecken verhindern. Die zur Beizung verwendeten Formulierungen werden als Beizen, Beizbrühen oder auch als Saatbeizen bezeichnet. Saatbeizen enthalten als Pflanzenschutzwirkstoffe üblicherweise Fungizide und/oder Insektizide. Diese Pflanzenschutzwirkstoffe können chemischer aber auch biologischer Herkunft sein. Als biologische Pflanzenschutzwirkstoffe werden üblicherweise spezielle Pilzsporen, Bakterien oder Viren eingesetzt. Die Pflanzenschutzwirkstoffe werden zumeist in Form von speziellen Formulierungen eingesetzt. Dabei handelt es sich üblicherweise um wässrige Formulierungen, in denen der Pflanzenschutzwirkstoff in konzentrierter Form vorliegt, im Folgenden auch als Beizmittel oder Saatgutbehandlungsmittel bezeichnet. Die zumeist in Wasser unlöslichen Pflanzenschutzwirkstoffe werden dabei mit Hilfe von Additiven ins Wasser dispergiert. Dieser Formulierungstyp wird auch Suspensionskonzentrat genannt. Bei diesen Suspensionskonzentraten liegt der Pflanzenschutzwirkstoff in Form von kleinteiligen, festen Partikeln in Wasser als Dispergiermittel (Dispersionsmittel) dispergiert vor. Wiederum andere Saatgutformulierungen werden als emulgierbares Konzentrat hergestellt. Die organischen Pflanzenschutzmittel werden dabei in einem organischen Lösungsmittel gelöst, welches Emulgatoren und weitere Additive enthalten kann. Dabei sind die handelsüblichen Saatbeizen auf Basis von wässrigen Suspensionskonzentraten in der Regel umweltfreundlicher als solche auf Basis von emulgierbaren Konzentraten. Die Beizmittel können genau wie herkömmliche Pflanzenschutzformulierungen auch, ebenso als Öldispersionen, Mikroemulsionen oder Suspoemulsionen formuliert sein, jedoch sind diese Formulierungstypen für die Verwendung in Saatbeizen weniger üblich. Das Beizmittel kann neben Pflanzenschutzmitteln und den genannten Additiven, wie beispielsweise Emulgatoren, Dispergiermittel, Farbstoffe oder Farbpigmente, noch weitere Zusatzstoffe enthalten. Zu diesen Zusatzstoffen zählen beispielsweise Kleber. Diese Kleber sollen die die Anhaftung des Pflanzenschutzmaterials am Saatgut gewährleisten. Die Beizbrühe wird durch Verdünnen des Beizmittels in Wasser hergestellt. Sie liegt als eine verdünnte, wässrige Dispersion oder Emulsion vor. Eine übliche Beizbrühe besteht beispielsweise aus:

- Wasser (200 bis 600 ml pro 100 kg Saatgut),
- Beizmittel (Saatgutbehandlungsmittel) (100 bis 300 ml pro 100 kg Saatgut),
- Optional weitere Additive (20 bis 100 ml pro 100 kg Saatgut).

Die Zusammensetzung kann aber durchaus auch von diesen Angaben abweichen. Die so hergestellte Beizbrühe wird mit Beizgeräten auf das Saatgut aufgebracht. Üblicherweise wird die Beizbrühe dazu in einem kontinuierlichen oder chargenweisen Prozess in der Mischtrommel (Saatguttrommel) des Beizgerätes mit dem Saatgut vermischt. Die Beizbrühe wird dabei mittels eines Schleudertellers in der Mischtrommel, in der sich das Saatgut befindet, versprüht. Die Dosierung wird üblicherweise mit einer Schlauchpumpe vorgenommen, das Schlauchende befindet sich kurz oberhalb des Schleudertellers. Üblicherweise wird so vorgegangen, dass das Saatgut in die Mischtrommel eingeführt wird, dann der Schleuderteller gestartet und schließlich die Beizbrühe eingesprüht wird. Der Beizvorgang ist üblicherweise nach ca. 30 Sekunden beendet. Daran kann sich ein Trocknungsprozess anschließen, bei dem das Wasser entfernt wird. Häufig ist eine aktive Entfernung des Wassers aber aufgrund der geringen Wassermenge, die eingesetzt wurde, nicht nötig, und das Wasser verdunstet oder wird durch das Saatgut absorbiert. Das Saatgut wird anschließend in der Regel abgesackt und in dieser Form zum Anwender geliefert.

Ein sehr großes Problem beim Aussäen des behandelten Saatguts ist die Staubentwicklung. Sie entsteht durch den Abrieb der Pflanzenschutzformulierung vom behandelten Saatgut. Das Abreiben der Pflanzenschutzformulierung kann bereits beim Absacken des gebeizten Saatgutes erfolgen. Beim Aussäen kann der Staub mit seinen Pflanzenschutzbestandteilen durch Wind in der Umwelt verteilt werden. Dies ist unerwünscht. Die Staubentwicklung sollte möglichst vermieden werden, um eine unkontrollierte Verbreitung der enthaltenen Pflanzenschutzwirkstoffe zu vermeiden. Schließlich können die in den Beizmitteln enthaltenen Insektizide nützlichen Insekten, wie Bienen und Hummeln, schaden, und die enthaltenen Fungizide können schädlich für andere Pflanzen sein. Um die Staubentwicklung zu reduzieren, können zusätzlich oder alternativ zum Kleber, Staubbindemittel verwendet werden. Dazu kann der Beizbrühe neben dem Beizmittel noch zusätzlich ein Staubbindemittel (Antistaubmittel) zugesetzt werden. Alternativ kann das Staubbindemittel auch bereits ein Bestandteil des Beizmittels sein.

Als Antistaubmittel werden zum Beispiel Silikonölemulsionen eingesetzt. Silikonölemulsionen können den Abrieb durch eine Schmierwirkung verringern, sowie den Saatgutfluss während der Anwendung erhöhen. Dies wird beispielsweise in der WO 2012/168210 beschrieben. Jedoch haben Silikonölemulsionen den Nachteil, dass sie zu einem erheblichen Reinigungsaufwand des Beizgerätes führen, da die enthaltenen Silikonöle in Wasser und den meisten üblichen Reinigungslösungsmitteln unlöslich sind.

Um die Staubentwicklung zu verringern, ist es auch denkbar, den Gehalt an Kleber zu erhöhen. Dies ist aber nur bedingt möglich, da die Fließfähigkeit des Saatguts beim Aussäen erhalten werden muss, die Fließfähigkeit aber durch den Kleber negativ beeinflusst wird.

Die US 7,081,436 offenbart Saatgutbehandlungsmitteln, die zur Verringerung der Staubbildung als Kleber Kohlenwasserstofföle mit einem Siedepunkt von mindestens 150 °C enthalten. Als bevorzugte Kleber werden Pflanzenöl, wie beispielsweise Rapsöl, Petroleum-basierte Kohlenwasserstofföle, paraffinische/naphthenische Kohlenwasserstofföle, Mineralöl, und Mischungen daraus offenbart. Auch diese Verbindungen haben den Nachteil, in Wasser unlöslich zu sein, was die Reinigung des Beizgerätes erschwert. Um die Wasserlöslichkeit zu verbessern, wäre es auch denkbar Emulgatoren einzusetzen beziehungsweise die Menge an eingesetzten Emulgatoren zu erhöhen. Dies kann aber einen negativen Einfluss auf die Stabilität der Pflanzenschutzformulierungen haben. Die US 7,081,436 offenbart weiterhin die Verwendung von polyethermodifizierten Siloxane in Saatgutbehandlungsmitteln. Die polyethermodifizierten Siloxane werden dabei allerdings mit dem Ziel eingesetzt, die Farbintensität der im Saatgutbehandlungsmittel enthaltenen Pigmente zu verbessern und eine einheitliche Beschichtung des Saatgutbehandlungsmittels zu gewährleisten. Die polyethermodifizierten Siloxane werden dagegen nicht eingesetzt, um die Staubbildung zu verringern. Sie werden also nicht als Staubbindemittel verwendet.

Die Antistaubmittel des Standes der Technik weisen also verschiedene Nachteile auf. Aufgabe der vorliegenden Erfindung war es daher, zumindest einen Nachteil des Standes der Technik zu überwinden. Es bestand dabei insbesondere die Aufgabe, ein Antistaubmittel bereitzustellen, das die Staubentwicklung bei Saatgut verringert, und sich zudem bei der Reinigung des Beizgerätes leicht mit Wasser entfernen lässt.

Überraschenderweise wurde gefunden, dass polyethermodifizierte Siloxane, verwendet als Staubbindemittel, diese Aufgabe lösen.

Polyethermodifizierte Siloxane führen zu einer Verringerung der Staubentwicklung und eignen sich somit als Staubbindemittel. Sie haben dabei den Vorteil, dass sie wasserlöslich oder in Wasser emulgierbar sind. Geräte, die mit den verwendungsgemäßen Verbindungen in Berührung gekommen sind, lassen sich somit umweltfreundlich mit Wasser reinigen. Der Einsatz von zusätzlichen Emulgatoren, die einen negativen Einfluss auf die Stabilität von Pflanzenschutzformulierungen haben können, kann reduziert oder sogar vermieden werden. Es müssen auch keine organischen Lösungsmittel zur Reinigung verwendet werden.

Gelöst wird die Aufgabe der vorliegenden Erfindung daher durch die Gegenstände der unabhängigen Ansprüche. Vorteilhafte Ausgestaltungen der Erfindung sind in den nachgeordneten Ansprüchen, den Beispielen und der Beschreibung angegeben.

Die Erfindung wird nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Jede Ausführungsform, die durch Kombination von Bereichen/Teilbereichen und/oder Gruppen/Teilgruppen erhalten werden kann, wie beispielsweise durch Kombinationen von erfindungsgemäßen, wesentlichen, optionalen, bevorzugten, vorzugsweisen bzw. vorzugsweise ausgewählten, weiter bevorzugten, noch weiter bevorzugten, besonders bevorzugten oder insbesondere bevorzugten Bereichen/Teilbereichen und/oder Gruppen/Teilgruppen, gehört vollständig zum Offenbarungsgehalt der vorliegenden Erfindung und gilt als explizit, unmittelbar und eindeutig offenbart. Die Ausdrücke "vorzugsweise" und "bevorzugt" werden synonym verwendet. Die Ausdrücke "insbesondere" und "insbesondere bevorzugt" werden ebenfalls synonym verwendet. Werden im Rahmen der vorliegenden Beschreibung Dokumente zitiert, so soll deren Inhalt vollständig zum Offenbarungsgehalt der vorliegenden Erfindung gehören. Bei Zusammensetzungen beziehen sich die %-Angaben, wenn nicht anders angegeben, auf die Gesamtzusammensetzung. Werden nachfolgend Angaben in Prozent gemacht, so handelt es sich, wenn nicht anders angegeben, um Angaben in Gewichts-%. Werden nachfolgend Mittelwerte angegeben, so handelt es sich, wenn nicht anders angegeben, um Zahlenmittel. Werden nachfolgend Messwerte oder Stoffeigenschaften angegeben, so handelt es sich, wenn nicht anders angegeben, um Messwerte oder Stoffeigenschaften gemessen bei 25 °C sowie vorzugsweise bei einem Druck von 101325 Pa (Normaldruck) und vorzugsweise bei einer relativen Luftfeuchtigkeit von 50%. Das zahlenmittlere Molekulargewicht $M_N$ wird mittels Gel-Permeations-Chromatographie (GPC) gemäß der Norm DIN 55672:2016, vorzugsweise gemäß der Norm DIN 55672-1:2016 bestimmt. Werden nachfolgend Zahlenbereiche in der Form "von X bis Y" oder "X bis y" angegeben, wobei X und Y die Grenzen des Zahlenbereichs darstellen, so ist dies gleichbedeutend mit der Angabe "von mindestens X bis einschließlich Y", sofern

nicht anders angegeben. Bereichsangaben schließen die Bereichsgrenzen X und Y also mit ein, sofern nicht anders angegeben. Wo immer Moleküle beziehungsweise Molekülfragmente ein oder mehrere Stereozentren aufweisen oder aufgrund von Symmetrien in Isomere unterschieden werden können oder aufgrund anderer Effekte, wie beispielsweise eingeschränkter Rotation, in Isomere unterschieden werden können, sind alle möglichen Isomere von der vorliegenden Erfindung miteingeschlossen. Spezielle Ausführungen sind im Folgenden definiert, so dass Merkmale wie Indizes oder Strukturbestandteile durch die Ausführung Beschränkungen erfahren können. Für alle Merkmale, die nicht von der Beschränkung betroffen sind, bleiben die übrigen Definitionen jeweils gültig. Das Wortfragment "Poly" umfasst im Zusammenhang mit dieser Erfindung nicht nur ausschließlich Verbindungen mit zumindest 2 Wiederholungseinheiten eines oder mehrerer Monomere im Molekül, sondern vorzugsweise auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen. Die verschiedenen Fragmente in den nachfolgenden Formeln (I), (II), (III) und (IV) können statistisch verteilt sein. Statistische Verteilungen können blockweise aufgebaut sein mit einer beliebigen Anzahl an Blöcken und einer beliebigen Sequenz oder sie können einer randomisierten Verteilung unterliegen; sie können auch alternierend aufgebaut sein oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. Die zweibindigen Einheiten ($OC_2H_3R^3$) in Formel (II) und (III) sowie [$CH_2CH(CH_3)O$] in Formel (IV) können unterschiedlich an die benachbarten Gruppen oder Atome gebunden sein. In Formel (II) und Formel (III) steht ($OC_2H_3R^3$) jeweils unabhängig voneinander für einen Rest der Form [$CH_2CH(R^3)O$] und/oder der Form [$CH(R^3)CH_2O$], vorzugsweise aber für einen Rest der Form [$CH_2CH(R^3)O$]. Entsprechend steht [$CH_2CH(CH_3)O$] in Formel (IV) jeweils unabhängig voneinander für einen Rest der Form [$CH_2CH(CH_3)O$] und/oder der Form [$CH(CH_3)CH_2O$], vorzugsweise aber für einen Rest der Formel [$CH_2CH(CH_3)O$]. Die Formeln (I), (II) (III) und (IV) beschreiben Verbindungen, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die entsprechenden Indizes sind das numerische Mittel über alle Wiederholungseinheiten. Die in den Formeln verwendeten Indizes a, b, c, c(1), c(2), c(3), c(4) und gegebenenfalls d sind als statistische Mittelwerte (Zahlenmittel) zu betrachten. Index d kann dabei aber auch ganzzahlig sein. Die verwendeten Indexzahlen a, b, c, c(1), c(2), c(3), c(4) und gegebenenfalls d sowie die Wertbereiche der angegebenen Indizes werden also Mittelwerte der möglichen statistischen Verteilung der tatsächlichen vorhandenen Strukturen und/oder deren Mischungen verstanden. Die erfindungsgemäß zu verwendenden polyethermodifizierten Siloxane liegen bevorzugt in Form von equilibrierten Gemischen vor. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht. Der Begriff "ungesättigt" beschreibt das Vorliegen von einer oder mehreren Kohlenstoff-Kohlenstoff-Dreifachbindungen und/oder Kohlenstoff-Kohlenstoff-Doppelbindungen, die nicht Teil eines aromatischen Rings sind. Die Begriffe "Staubbindemittel" und "Antistaubmittel" sind gleichbedeutend.

Ein erster Gegenstand der vorliegenden Erfindung ist die Verwendung von mindestens einem polyethermodifizierten Siloxan als Staubbindemittel für Saatgut.

Die erfindungsgemäße Verwendung der polyethermodifizierten Siloxane führt zu einer Verringerung der Staubentwicklung. Des Weiteren lassen sich Geräte, die mit den verwendungsgemäßen Verbindungen in Berührung gekommen sind, umweltfreundlich mit Wasser reinigen.

Ohne durch eine Theorie gebunden zu sein, wird angenommen, dass der Siloxananteil des polyethermodifizierten Siloxans, ähnlich wie bei Silikonölen, die Staubbildung verringert, der Polyetheranteil des polyethermodifizierten Siloxans wiederum die Löslichkeit beziehungsweise Emulgierbarkeit in Wasser ermöglicht.

Unter einem polyethermodifizierten Siloxan wird eine Verbindung verstanden, die an Siliziumatome gebundene organische Reste sowie Struktureinheiten der Formel ≡Si-O-Si≡ aufweist, wobei "≡" für die drei verbleibenden Valenzen des betrachteten Siliziumatoms steht und wobei mindestens ein organischer Rest einen Polyetherrest umfasst. Vorzugsweise handelt es sich bei den polyethermodifizierten Siloxanen um Verbindungen, die aus Einheiten ausgewählt aus der Gruppe bestehend aus M = [$R^1{}_3SiO_{1/2}$], D = [$R^1{}_2SiO_{2/2}$], T = [$R^1{}_3SiO_{2/2}$] zusammengesetzt sind und optional zusätzlich Einheiten der Formel Q = [$R^1{}_4SiO_{3/2}$] aufweisen, wobei $R^1$ für einen einbindigen organischen Rest steht und mindestens ein Rest $R^1$ ein einbindiger Polyetherrest $R^2$ ist und alle verbleibenden Reste $R^1$ einbindige Kohlenwasserstoffreste R sind. Die Reste $R^1$ beziehungsweise R und $R^2$ können dabei jeweils unabhängig voneinander gewählt werden und sind im paarweisen Vergleich gleich oder unterschiedlich.

Es ist bevorzugt, dass das mindestens eine verwendete polyethermodifizierte Siloxan 41 bis 81, vorzugsweise 43 bis 75, insbesondere 45 bis 70 Siliziumatome aufweist.

Die Verwendung dieser polyethermodifizierten Siloxanen als Staubbindemittel bei der Beizung von Saatgut hat den Vorteil, dass das behandelte Saatgut nur eine sehr geringe Tendenz zur Staubentwicklung zeigt.

Es ist weiterhin bevorzugt, dass das mindestens eine polyethermodifizierte Siloxan eine Verbindung der allge-

meinen Formel (I) ist,

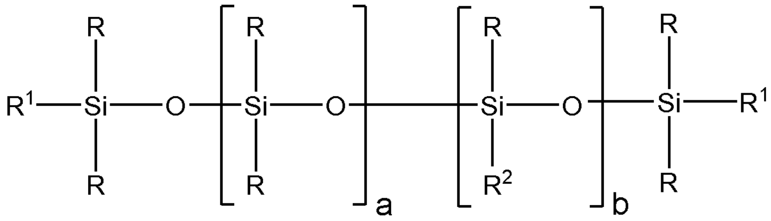

Formel (I);

wobei gilt:

R ist jeweils unabhängig voneinander ausgewählt aus der Gruppe bestehend aus einbindigen Kohlenwasserstoffresten mit 1 bis 18 Kohlenstoffatomen, vorzugsweise jeweils unabhängig voneinander ausgewählt aus der Gruppe bestehend aus Methyl, Ethyl, Propyl und Phenyl, insbesondere Methyl;

$R^1$ ist jeweils unabhängig voneinander ausgewählt ist aus der Gruppe bestehend aus R und $R^2$, vorzugsweise R, insbesondere Methyl;

$R^2$ ist jeweils unabhängig voneinander ausgewählt aus der Gruppe bestehend aus einbindigen Polyetherresten der allgemeinen Formel (II), $-Z[(OC_2H_3R^3)_cOR^4]_d$ Formel (II);

Z ist jeweils unabhängig voneinander ausgewählt aus der Gruppe bestehend aus, gegebenenfalls von Sauerstoffatomen unterbrochenen, (d+1)-bindigen Kohlenwasserstoffresten mit 2 bis 10, vorzugsweise 3 bis 4, insbesondere 3 Kohlenstoffatomen;

$R^3$ ist jeweils unabhängig voneinander ausgewählt aus der Gruppe bestehend aus H und einbindigen Kohlenwasserstoffresten mit 1 bis 8 Kohlenstoffatomen, vorzugsweise jeweils unabhängig voneinander ausgewählt aus der Gruppe bestehend aus H, Methyl, Ethyl und Phenyl, insbesondere jeweils unabhängig voneinander ausgewählt aus der Gruppe bestehend aus H und Methyl;

$R^4$ ist jeweils unabhängig voneinander ausgewählt aus der Gruppe bestehend aus H, einbindigen Kohlenwasserstoffresten mit 1 bis 8 Kohlenstoffatomen und Acylresten mit 1 bis 8 Kohlenstoffatomen, vorzugsweise jeweils unabhängig voneinander ausgewählt aus der Gruppe bestehend aus H, Methyl und Acetyl, insbesondere H;

a = 31 bis 74, vorzugsweise 33 bis 70, insbesondere 35 bis 60;

b = 6 bis 50, vorzugsweise 6 bis 30, insbesondere 6 bis 15;

c = 3 bis 100, vorzugsweise 5 bis 50, insbesondere 10 bis 30;

d = 1 bis 3, vorzugsweise 1 bis 2, insbesondere 1.

Da es bevorzugt ist, dass das mindestens eine polyethermodifizierte Siloxan 41 bis 80, vorzugsweise 43 bis 75, insbesondere 45 bis 70 Siliziumatome aufweist, gilt entsprechend bevorzugt a+b+2 = 41 bis 80, vorzugsweise 43 bis 75, insbesondere 45 bis 70.

Vorzugsweise gilt für das mindestens eine polyethermodifizierte Siloxan der allgemeinen Formel (I) weiterhin: R = Methyl, $Z = -CH_2CH_2CH_2-$, $R^4 = H$ und d = 1.

Vorzugsweise sind die zweibindigen Polyetherreste $(OC_2H_3R^3)_c$ jeweils unabhängig voneinander ausgewählt sind aus Resten der allgemeinen Formel (III),

$$(OC_2H_4)_{c(1)}(OC_3H_6)_{c(2)}(OC_4H_8)_{c(3)}(OC_2H_3Ph)_{c(4)} \qquad \text{Formel (III),}$$

worin:

Ph Phenyl ist;

mit: c(1) = 1 bis 100, vorzugsweise 4 bis 50, insbesondere 8 bis 30;

c(2) = 0 bis 70, vorzugsweise 1 bis 40, insbesondere 3 bis 20;

c(3) = 0 bis 5, vorzugsweise 0 bis 2, insbesondere 0;

c(4) = 0 bis 5; vorzugsweise 0 bis 2, insbesondere 0;

mit der Maßgabe, dass gilt:

$$c(1)+c(2)+c(3)+c(4) = c.$$

Es ist demnach bevorzugt, dass der einbindige Polyetherrest $R^2$ der allgemeinen Formel (II) einen oder mehrere zweibindige Polyetherreste der allgemeinen Formel (III) umfasst, die auf Ethylenoxid, Propylenoxid, Butylenoxid und/oder Styroloxid oder deren Mischungen basieren.

Es ist besonders bevorzugt, dass der einbindige Polyetherrest $R^2$ der allgemeinen Formel (II) einen oder mehrere zweibindige Polyetherreste der allgemeinen Formel (III) umfasst, die auf Ethylenoxid und/oder Propylenoxid nicht aber auf Butylenoxid und Styroloxid basieren. Es ist also besonders bevorzugt, dass gilt: c(3) = c(4) = 0. Dadurch wird die Löslichkeit des polyethermodifizierten Siloxans in Wasser weiter verbessert.

Es ist bevorzugt, dass $R^2$ jeweils unabhängig voneinander ausgewählt ist aus Resten der allgemeinen Formel $-CH_2CH_2CH_2O[C_2H_5O]_{c(1)}[CH_2CH(CH_3)O]_{c(2)}H$. Das entsprechende polyethermodifizierte Siloxan ist beispielsweise erhältlich durch Hydrosilylierung eines terminal ungesättigten Polyethers der allgemeinen Formel $CH{=}CHCH_2O[C_2H_5O]_{c(1)}[CH_2CH(CH_3)O]_{c(2)}H$ mit einem SiH-funktionellen Siloxan. Bevorzugt leitet sich $R^2$ also von einem terminal ungesättigten Polyether der allgemeinen Formel $CH{=}CHCH_2O[C_2H_5O]_{c(1)}[CH_2CH(CH_3)O]_{c(2)}H$ ab, wobei der Polyether wiederum aus der Umsetzung von Ethylenoxid und optional Propylenoxid mit Allylalkohol erhältlich ist.

Besonders bevorzugt ist demanch die Verwendung von mindestens einem polyethermodifzierten Siloxan der allgemeinen Formel (IV),

$$Me_3SiO[SiMe_2O]_a[SiMeR^2O]_bSiMe_3 \qquad \text{Formel (IV),}$$

mit

| | |
|---|---|
| $R^2$ | = jeweils unabhängig voneinander ausgewählt aus einbindigen Resten der Formel $-CH_2CH_2CH_2O[C_2H_5O]_{c(1)}[CH_2CH(CH_3)O]_{c(2)}H$; |
| a | = 31 bis 74, vorzugsweise 33 bis 70, insbesondere 35 bis 60; |
| b | = 6 bis 50, vorzugsweise 6 bis 30, insbesondere 6 bis 15; |
| c(1) | = 1 bis 100, vorzugsweise 4 bis 50, insbesondere 8 bis 30; |
| c(2) | = 0 bis 70, vorzugsweise 1 bis 40, insbesondere 3 bis 20; |

mit der Maßgabe, dass gilt:

c(1)+c(2) = 3 bis 100, vorzugsweise 5 bis 50, insbesondere 10 bis 30;

als Staubbindemittel für Saatgut, wobei die Indizes a, b, c(1), c(2) wie in Formel (I), (II) oder (III) definiert sind.

Es ist weiterhin bevorzugt, dass die Anzahl der Oxyethylengruppen ($OC_2H_4$) zur Anzahl der Gruppen ($OC_2H_3R^3$) mit $R^3 \neq H$ im polyethermodifizierten Siloxan in einem Verhältnis von 0,5 bis 20, vorzugsweise von 0,6 bis 10, insbesondere von 0,8 bis 6 vorliegt. Bevorzugt gilt also: c(1)/(c(2)+c(3)+c(4)) = 0,5 bis 20, vorzugsweise 0,6 bis 10, insbesondere 0,8 bis 6. Dies hat den Vorteil, dass die Löslichkeit des polyethermodifizierten Siloxans in Wasser weiter verbessert wird. Bevorzugt ist entsprechend auch, dass der Massenanteil an Oxyethylengruppen ($OC_2H_4$) bezogen auf die Gesamtmasse aller Gruppen ($OC_2H_3R^3$) im polyethermodifizierten Siloxan von 35% bis 95%, vorzugsweise von 40% bis 90%, insbesondere von 45% bis 85% beträgt.

Vorzugsweise beträgt das zahlenmittlere Molekulargewicht $M_N$ von $R^2$ von 200 g/mol bis 2500 g/mol, vorzugsweise von 400 g/mol bis 2000 g/mol, insbesondere von 500 g/ml bis 1500 g/mol. Das zahlenmittlere Molekulargewicht $M_N$ von $R^2$ ist dabei definiert als das zahlenmittlere Molekulargewicht $M_N$ des entsprechenden, bei der Herstellung der polyethermodifizierten Siloxans eingesetzten, ungesättigten Polyethers, und wird mittels Gel-Permeations-Chromatographie (GPC) gemäß der Norm DIN 55672:2016, vorzugsweise gemäß der Norm DIN 55672-1:2016 bestimmt.

Es ist weiterhin bevorzugt, dass der zweibindige Polyetherrest $(OC_2H_3R^3)_c$ beziehungsweise der Polyetherrest $R^2$ berechnet ohne den Rest Z und ohne den Rest $OR^4$ eine Molmasse M(PE) von 140 g/mol bis 2460 g/mol, vorzugsweise von 360 g/mol bis 1940 g/mol, insbesondere von 440 g/mol bis 1460 g/mol aufweist. Die Molmasse M(PE) berechnet sich dabei nach der Gleichung:

$$M(PE) = 44\ g/mol * c(1) + 58\ g/mol * c(2) + 72\ g/mol * c(3) + 120\ g/mol * c(4),$$

wobei sich c(1), c(2), c(3) und c(4) auf die Indizes in Formel (III) beziehen.

Z ist jeweils unabhängig voneinander ausgewählt aus der Gruppe bestehend aus, gegebenenfalls von Sauerstoffatomen unterbrochenen, (d+1)-bindigen Kohlenwasserstoffresten mit 2 bis 10, vorzugsweise 3 bis 4, insbesondere 3 Kohlenstoffatomen. Es ist weiterhin bevorzugt, dass Z ein zweibindiger oder dreibindiger Rest ist. Vorzugsweise ist Z ausgewählt aus der Gruppe bestehend aus:

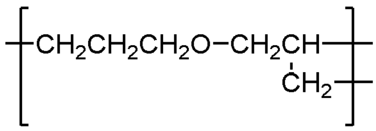, 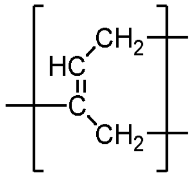, 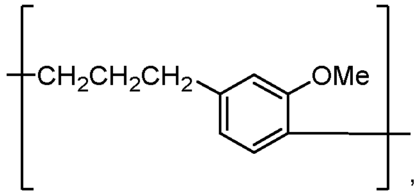,

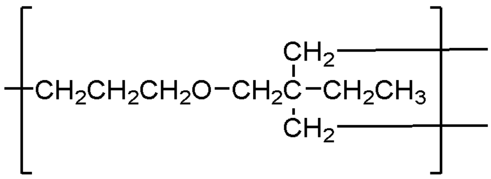,

$-CH_2CH(CH_3)CH_2-$, $-CH_2CH_2CH(CH_3)-$, $-CH_2CH_2C(CH_3)_2-$, $-CH_2CH_2CH_2-$, $-CH_2CH_2-$;
weiter bevorzugt ausgewählt aus der Gruppe bestehend aus:

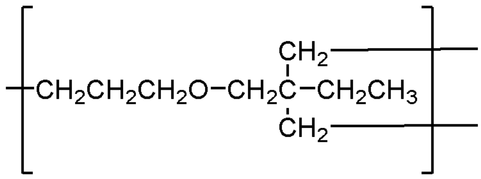, 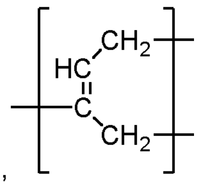

und $-CH_2CH_2CH_2-$; insbesondere $-CH_2CH_2CH_2-$;
wobei die Reste Z in der oben gewählten Darstellung links an ein Siliziumatom des Siloxangerüsts und rechts an einen beziehungsweise zwei Reste der Formel $(OC_2H_3R^3)_cOR^4$ gemäß Formel (I) gebunden sind.

Bevorzugt weisen die erfindgungsgemäß zu verwendenen polyethermodifzierten Siloxane einen Cloudpoint (Trübungspunkt) von größer 30°C auf. Der Cloudpoint kann wie für Mineralölerzeugnisse gemäß der Norm DIN EN 23015:1994-05 oder der Norm DIN EN ISO 3015:2018-04 bestimmt werden.

Besonders bevorzugt ist die Verwendung von mindestens einem polyethermodifzierten Siloxan der allgemeinen Formel (IV),

$$Me_3SiO[SiMe_2O]_a[SiMeR^2O]_bSiMe_3 \qquad \text{Formel (IV),}$$

mit

| | |
|---|---|
| $R^2$ | = jeweils unabhängig voneinander ausgewählt aus Resten der Formel $-CH_2CH_2CH_2O[C_2H_5O]_{c(1)}[CH_2CH(CH_3)O]_{c(2)}H$; |
| a | = 35 bis 45; |
| b | = 6 bis 11; |
| c(1) | = 8 bis 20; |
| c(2) | = 3 bis 9; |

als Staubbindemittel für Saatgut, wobei die Indizes a, b, c(1), c(2) wie in Formel (I), (II) oder (III) definiert sind. Die Staubwerte werden bei der Verwendung dieses polyethermodifzierten Siloxans besonders stark verringert.

Vorzugsweise sind die verwendeten polyethermodifizierten Siloxane, weitgehend oder vollständig, biologisch abbaubar. Die biologische Abbaubarkeit dabei wird vorzugsweise nach der OECD 301 F Methode bestimmt. Mehr bevorzugt wird die biologische Abbaubarkeit nach OECD 301 F nach 28 Tagen bei 22 °C bestimmt. Weiter bevorzugt wird die biologische Abbaubarkeit wie in EP 3106033 A1, insbesondere wie in den dortigen Beispielen beschrieben bestimmt. Es ist dabei bevorzugt, dass die polyethermodifizierten Siloxane eine biologische Abbaubarkeit von größer oder gleich 60%, insbesondere von größer oder gleich 65% aufweist, wobei der Maximalwert 100% beträgt.

Die verwendeten polyethermodifizierten Siloxane können beispielsweise auf die dem Fachmann bekannte Weise durch Hydrosilylierung aus den entsprechenden ungesättigten Polyethern und den entsprechenden SiH-funktionellen Siloxanen erhalten werden. Das vorzugsweise verwendete Verfahren zur Herstellung der erfindungsgemäss verwendeten polyethermodifizierten Siloxane ist eine Übergangsmetallkatalysierte Hydrosilylierung der ungesättigten Polyether mit SiH-funktionellen Siloxanen unter Ausbildung von Si-C-Verknüpfungen, wie sie beispielsweise in EP

1520870, EP 1439200, EP 1544235, US 4147847, US 4025456, EP 0493836 oder US 4855379 und den darin zitierten Dokumenten beschrieben wird. Vorzugsweise wird ein Platinkatalysator zur Katalyse der Hydrosilylierung eingesetzt.

Die Herstellung der im Rahmen der Hydrosilylierung eingesetzten ungesättigten Polyether, auf denen die Reste der Formel (II) basieren, bevorzugt Allylpolyether, ist ebenfalls aus dem Stand der Technik bekannt. So ist zum Beispiel in EP 1360223 und den darin zitierten Dokumenten die Herstellung von ungesättigten Polyethern mit und ohne Derivatisierung der OH-Funktionalität beschrieben. In US 5877268 und US 5856369 wird die Herstellung von Allyl-gestarteten Polyethern mit DMC-Katalyse beschrieben. DE 19940797 beschreibt die Herstellung und Verwendung von Polyalkylenoxiden unter Verwendung von Kaliummethanolat als Katalysator. Weitere Verfahren werden in US 3957843, US 4059605, US 3507923, DE 102005001076 und DE 3121929 beschrieben.

Erfindungsgemäß werden die polyethermodifizierten Siloxane als Staubbindemittel für Saatgut verwendet.

Ein Staubbindemittel verringert die Staubbildung bei Saatgut, das mit einem Beizmittel beziehungsweise einer Beizbrühe behandelt wurde. Vorzugsweise wird als Maß für das Staubbindevermögen, also für die Verringerung der Staubentwicklung, und somit für die Wirksamkeit eines Zusatzstoffes als Staubbindemittel, der Staubwert, der mit Hilfe des Heubachtests (ESA 11.0387, ESA STAT Dust Working Group, Version 1.0 vom 23.03.2011) wie in den Beispielen beschrieben bestimmt wird, herangezogen. Kann der Staubwert durch die Zugabe des Zusatzstoffes zum Beizmittel beziehungsweise zur Beizbrühe gesenkt werden, handelt es sich bei dem Zusatzstoff um ein geeignetes Staubbindemittel. Dazu wird der Staubwert von Saatgut, das mit einer den Zusatzstoff enthaltenden Beizbrühe behandelt wurde, mit dem Staubwert von Saatgut verglichen, das auf die gleiche Weise, aber mit einer Beizbrühe die den Zusatzstoff nicht enthält, behandelt wurde.

Die Staubbindung des behandelten Saatguts kann über die Menge des polyethermodifizierten Siloxans eingestellt werden. Vorzugsweise wird das mindestens eine polyethermodifizierte Siloxan so verwendet, sodass der Massenanteil des mindestens einen polyethermodifizierten Siloxans bezogen auf die Gesamtmasse des behandelten Saatguts von 0,001 ppm bis 1000 ppm, vorzugsweise 0,01 ppm bis 100 ppm, insbesondere 0,1 ppm bis 10 ppm beträgt.

Als Saatgut bezeichnet der Fachmann trockene, ruhende, generative Fortpflanzungsorgane wie Samen, Früchte, Scheinfrüchte, Fruchtstände oder Teile davon. Sie enthalten die vollständige, durch Befruchtung entstandene Keimanlage der Pflanzen. Bevorzugt handelt es sich bei dem verwendeten Saatgut um Körnerfrüchte von Süßgräsern. Süßgräser (Poaceae = Gramineae) sind eine Pflanzenfamilie in der Ordnung der Süßgrasartigen (Poales). Diese Körnerfrüchte werden auch als Getreidekörner bezeichnet. Insbesondere bevorzugt sind die Körnerfrüchte ausgewählt aus der Gruppe bestehend aus Körnerfrüchten Weizen, Roggen, Gerste, Hafer, Triticale, Reis, Mais und Hirse.

Die Behandlung des Saatguts erfolgt wie einleitend beschrieben.

Ein weiterer Gegenstand der Erfindung ist daher ein Verfahren zur Verringerung der Staubbildung bei Saatgut, umfassend die Schritte:

a. Bereitstellen von Saatgut,
b. Behandlung des Saatguts mit mindestens einem polyethermodifizierten Siloxan.

Das polyethermodifizierte Siloxan kann dabei Bestandteil der Beizbrühe oder des Beizmittels sein.

Bevorzugt werden die verwendungsgemäßen polyethermodifizierten Siloxane in wässrigen Zusammensetzungen verwendet. Bevorzugt weisen die verwendungsgemäßen Zusammensetzungen, also das Beizmittel beziehungsweise die Beizbrühe, keine Emulgatoren auf. Es ist weiterhin bevorzugt, dass die verwendungsgemäßen Zusammensetzungen weitere Inhaltsstoffe ausgewählt aus Fungiziden, Insektiziden, Pestiziden, Herbiziden, Nematiziden, Düngemitteln, Nährstoffen, Mikroorganismen, Klebern, Pigmenten, Surfactants, Dispersionsmitteln (Dispergiermitteln), Rieselhilfsmitteln und Entschäumern aufweisen.

Die Beizbrühe ist vorzugsweise eine verdünnte, wässrige Dispersion oder Emulsion. Bevorzugt umfasst die Beizbrühe:

- Wasser, bevorzugt in einer Menge von 200 bis 600 ml pro 100 kg Saatgut;
- Beizmittel (Saatgutbehandlungsmittel), bevorzugt in einer Menge von 100 bis 300 ml pro 100 kg Saatgut;
- optional weitere Additive, bevorzugt in einer Menge von 20 bis 100 ml pro 100 kg Saatgut.

Die oben aufgeführten Inhaltsstoffe, also die Fungizide, Insektizide, Pestizide, Herbizide, Nematizide, Düngemittel, Nährstoffe, Mikroorganismen, Kleber, Pigmente, Surfactants, Dispersionsmittel, Rieselhilfsmittel oder Entschäumer sowie das polyethermodifizierte Siloxan, sind vorzugsweise Bestandteil des Beizmittels, können aber auch als weiteres Additiv der Beizbrühe hinzugegeben werden.

Wie einleitend beschrieben, wird das Saatgut in der Mischtrommel (Saatguttrommel) eines Beizgerätes vorgelegt und die Beizbrühe kontinuierlich oder chargenweise hinzugegeben und mit dem Saatgut vermischt. Die Beizbrühe wird dabei vorzugsweise mittels eines Schleudertellers in der Mischtrommel, in der sich das Saatgut befindet, versprüht. Beispielsweise wird in einem ersten Schritt das Saatgut in die Mischtrommel gegeben, der Schleuderteller gestartet und

die Brühe eingesprüht. Der Beizvorgang ist vorzugsweise nach 30 Sekunden beendet. Daran kann sich ein Trocknungsprozess anschließen, bei dem das Wasser entfernt wird. Vorzugsweise findet keine aktive Entfernung des Wassers statt. Das behandelte Saatgut ist vorzugweise homogen mit den nicht-wässrigen Bestandteilen der Beizbrühe beschichtet Das behandelte Saatgut wird im Anschluss vorzugsweise abgesackt und in dieser Form zum Anwender geliefert.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Beispiele:

*Allgemeine Methoden:*

Bestimmung des Staubwertes:

Die Bestimmung der Staubwerte wird gemäß ESA 11.0387 (ESA STAT Dust Working Group, Version 1.0 vom 23.03.2011) Methode durchgeführt. Hierbei wird der Heubachtest *"Assessment* of *free floating dust and abrasion particles of treated seeds as a parameter of the quality of treated seeds"* mit einem Dustmeter der Firma Heubach, Typ 1 gemäß Anleitung durchgeführt. Der Heubachtest ist der in der Industrie standardmäßig durchgeführte Test zur Bestimmung der Staubneigung von gebeiztem Saatgut. Beim Heubachtest wird die Anhaftung beziehungsweise der Abrieb des Beizmittels auf dem Saatgut gemessen. Dabei werden 100 g gebeiztes Saatgut in eine Trommel gefüllt, die sich anschließend dreht. Das Saatgut wird dadurch mechanisch belastet, ein Luftstrom wird durch die Anlage geführt. Die abgelösten Beizstäube werden auf einer Filtereinheit gesaugt, und der Filter wird ausgewogen. Das Ergebnis ist der Heubachwert, der oft in g Staub pro dt gebeiztes Saatgut, aber auch g Staub pro 100.000 Saatkörner angegeben wird. Oft findet man auch einen gerechneten Wert g Staub pro ha.

Charakterisierung der Siloxane:

Die Charakterisierung der Siloxane kann mit Hilfe der $^{1}$H-NMR- und $^{29}$Si-NMR-Spektroskopie erfolgen. Diese Methoden, insbesondere unter Berücksichtigung der Multiplizität der Kopplungen, sind dem Fachmann geläufig.

Bestimmungen der SiH-Werte:

Die Bestimmungen der SiH-Werte der eingesetzten SiH-funktionellen Siloxane, aber auch die der Reaktionsmatrices, erfolgen hierbei jeweils gasvolumetrisch durch die Natriumbutanolat-induzierte Zersetzung aliquot eingewogener Probemengen an einer Gasbürette. Eingesetzt in die allgemeine Gasgleichung gestatten die gemessenen Wasserstoffvolumina die Gehaltsbestimmung aktiver SiH-Funktionen in den Edukten aber auch in den Reaktionsansätzen und erlauben so die Umsatzkontrolle. Eingesetzt wird eine Lösung von Natriumbutanolat in Butanol (5 Gew.-% Natriumbutanolat).

*Synthese von erfindungsgemäss verwendbaren polyethermodifzierten Siloxanen:* Beispiel 1:

Es wurden 17,8 g Polymethylhydrosiloxan (CAS: 63148-57-2, Gelest Inc., Code HMS-992 $M_{eq.}$ = 63,8 g/mol SiH, also 63,8 g bezogen auf die Anzahl der SiH-Gruppen) mit 3,5 g Hexamethyldisiloxan und 78,7 g Octamethylcyclotetrasiloxan gemischt und mit 0,1 g Trifluormethansulfonsäure (Reinheit: 99 Gew.-%) versetzt. Die Mischung wurde 24 h bei Raumtemperatur gerührt. Anschließend wurden 2 g $NaHCO_3$ zugesetzt und 4 h gerührt. Die Mischung wurde filtriert. Es wurde eine klare Flüssigkeit erhalten. Das erhaltene Siloxan wurde mit Hilfe der $^{29}$Si-NMR-Spektroskopie charakterisiert. Es wurde ein SiH-funktionelles Siloxan der Summenformel $Me_3SiO[SiMe_2O]_{38}[SiMeHO]_{10}SiMe_3$ erhalten. Zur Herstellung des polyethermodifizierten Polyethersiloxans wurde das erhaltene SiH-funktionelle Siloxan mit einem ungesättigten Polyether im Rahmen einer Hydrosilylierungsreaktion umgesetzt. Die Hydrosilylierungsreaktion wurde in Gegenwart einer Platin(0)-1,3-divinyl-1,1,3,3-tetramethyldisiloxan-Komplett-Lösung in Xylol (bezogen von Sigma-Aldrich, Pt-Gehalt: 2 Gew.-%) als Karstedt-Katalysator durchgeführt. Die Hydrosilylierungsreaktion wurde in Bezug auf den Wasserstoffgehalt der SiH-funktionellen Siloxane zu einem vollständigen Umsatz gebracht. Unter einem vollständigen Umsatz wird im Rahmen der vorliegenden Offenbarung verstanden, dass mehr als 99% der SiH-Funktionen umgesetzt wurden. Der Nachweis erfolgt auf die dem Fachmann geläufige Art gasvolumetrisch nach alkalischer Zersetzung. Konkret wurden 262 g eines ungesättigten Polyethers der Summenformel $CH_2=CHCH_2O[C_2H_5O]_{13,9}[CH_2CH(CH_3)O]_{5,3}H$ mit 70 g des zuvor erhaltenen SiH-funktionellen Siloxans der Summenformel $Me_3SiO[SiMe_2O]_{38}[SiMeHO]_{10}SiMe_3$ in einem 500-ml-Dreihalskolben mit KPG-Rührer und Rückflusskühler unter Stickstoffabdeckung gemischt. Die Mischung wurde auf 90 °C erhitzt. Anschließend wurden 0,16 g einer Lösung des

Karstedt-Katalysators in Xylol (2 Gew.-% Pt-Gehalt) der Mischung zugesetzt. Eine exotherme Reaktion setzte ein. Danach wurde für 2 h bei 90 °C gerührt. Es wurde eine klare Flüssigkeit erhalten. Der Umsatz an SiH-Funktionen betrug 100%. Als Reaktionsprodukt wurde ein polyethermodifiziertes Siloxan der Summenformel $Me_3SiO[SiMe_2O]_{38}[SiMeR^2O]_{10}SiMe_3$ mit $R^2$ = $-CH_2CH_2CH_2O[C_2H_5O]_{13,9}[CH_2CH(CH_3)O]_{5,3}H$ erhalten.

Beispiel 2:

Analog zur Herstellungsweise von Beispiel 1 wurde zunächst ein SiH-funktionelles Siloxan der Summenformel $Me_3SiO[SiMe_2O]_{20}[SiMeHO]_{5,5}SiMe_3$ hergestellt und anschließend in einer Hydrosilylierungsreaktion mit einem Polyether der Summenformel $CH_2=CHCH_2O[C_2H_5O]_{12,5}[CH_2CH(CH_3)O]_{3,3}H$ umgesetzt. Als Reaktionsprodukt wurde ein polyethermodifiziertes Siloxan der Summenformel $Me_3SiO[SiMe_2O]_{20}[SiMeR^2O]_{5,5}SiMe_3$ mit $R^2$ = $-CH_2CH_2CH_2O[C_2H_5O]_{12,5}[CH_2CH(CH_3)O]_{3,3}H$ erhalten.

*Herstellung und Untersuchung der gebeizten Saatgüter:*

Die Saatbeizen (Beizbrühen, Beizen) wurden durch einfaches Abmischen von Wasser und einem kommerziellen Suspensionskonzentrat zur Saatgutbehandlung für Weizen und Gerste (Landor® CT von Syngenta), mit den auf ihre staubmindernde Wirkung zu untersuchenden Zusatzstoffen abgemischt. Als Zusatzstoffe wurden die polyethermodifizierten Siloxan aus Beispiel 1 und 2, ein kommerziell erhältliches polyethermodifiziertes Siloxan der Firma Momentive (Beispiel 3), das kommerziell erhältliche Antistaubmittel MaximalFlow® der Firma BASF (Beispiel 4), sowie ein weiterer Zusatzstoff auf Basis einer Silikonölemulsion (Beispiel 5) untersucht. Das eingesetzte Suspensionskonzentrat Landor® CT ist eine Mischung von Fludioxonil, Difenoconazol und Tebuconazol zur Behandlung von Saatgut wie beispielsweise Weizen und Gerste. Es wurde in der üblichen Menge von 200 ml pro 100 kg Saatgut eingesetzt. Die verwendete Wassermenge betrug ebenfalls 200 ml pro 100 kg Saatgut. Die eingesetzten Mengen der Zusatzstoffe sind Tabelle 1 zu entnehmen. MaximalFlow® (Beispiel 4) wurde in der vom Hersteller empfohlenen Menge von 20 ml pro 100 kg Saatgut eingesetzt. Die polyethermodifizierten Siloxane wurden entsprechend ebenfalls mit 20 ml pro 100 kg Saatgut eingesetzt, Beispiel 1 zusätzlich auch mit 10 ml pro 100 kg Saatgut. Der Zusatzstoff auf Silikonölbasis Beispiel 5 (eine 35%ige Silikonölemulsion), wurde in einer Menge von 60 ml pro 100 kg Saatgut verwendet. Die so hergestellten Beizbrühen wurden mittels eines üblichen Beizgerätes (Mischsystem basierend auf dem Rotor-Stator-Prinzip) auf je 1 kg Saatgut (Weizen) aufgebracht. Anschließend wurden über den Heubachtest die Staubwerte, angegeben in g Staub pro 100 kg Saatgut, bestimmt (s. Tabelle 1).

Tabelle 1: Zusammensetzungen der Beizbrühen (Beizen) (Mengenangaben der Komponenten in ml pro 100 kg Saatgut); Staubwerte der gebeizten Saatgüter gemäß Heubachtest (Angaben in g Staub pro 100 kg Saatgut, ESA 11.0387, Kap 5.7)

| | Beizen | | | | | | |
|---|---|---|---|---|---|---|---|
| | 0 | 1a | 1b | 2 | 3 | 4 | 5 |
| Beispiel 1<br>Polyethermodifziertes Siloxan<br>$Me_3SiO[SiMe_2O]_{38}[SiMeR^2O]_{10}SiMe_3$ mit $R^2$ = $CH_2CH_2CH_2O[C_2H_5O]_{13,9}[CH_2CH(CH_3)O]_{5,3}H$ | | 10 | 20 | | | | |
| Beispiel 2<br>Polyethermodifziertes Siloxan<br>$Me_3SiO[SiMe_2O]_{20}[SiMeR^2O]_{5,5}SiMe_3$ mit $R^2$ = $CH_2CH_2CH_2O[C_2H_5O]_{12,5}[CH_2CH(CH_3)O]_{3,3}H$ | | | | 20 | | | |
| Beispiel 3<br>Polyethermodifziertes Trisiloxan<br>Silwet® L 77 (Momentive) * | | | | | 20 | | |
| Beispiel 4<br>Silikonölemulsion **<br>MaximalFlow® (BASF) | | | | | | 20 | |

(fortgesetzt)

| | Beizen | | | | | | |
|---|---|---|---|---|---|---|---|
| | 0 | 1a | 1b | 2 | 3 | 4 | 5 |
| Beispiel 5 Silikonölemulsion *** | | | | | | | 60 |
| Landor® CT (Syngenta) | 200 | 200 | 200 | 200 | 200 | 200 | 200 |
| Wasser | 200 | 200 | 200 | 200 | 200 | 200 | 200 |
| Staubwert (Heubachtest) | 0,7 | 0,1 | 0,03 | 0,3 | 0,4 | 0,2 | 0,4 |

* Trisiloxan $Me_3SiO[SiMeR^2O]SiMe_3$ wobei $R^2$ auf einem Allyalkohol-gestartem, EthylenoxyEinheiten aufweisenden Polyether mit einem zahlenmittleren Molgewicht $M_N$ von ca. 400 g/mol basiert. Dies entspricht einer Verbindung der Formel $Me_3SiO[SiMeR^2O]SiMe_3$ mit $R^2$ = $-CH_2CH_2CH_2O[C_2H_5O]_{7,8}H$

** enthält gemäß den Angaben des Herstellers eine Silikonölemulsion (479 g/l) und eine Polymerdispersion auf Basis von Acrylsäureester (478 g/l)

*** enthält 35 Gew.-% Silikonöl (Polydimethylsiloxan mit einer kinematischen Viskosität von 40.000 $mm^2/s$), 10% Emulgator (HLB ca. 12-13) und 45 Gew.-% Wasser

Das Referenzbeispiel ohne weiteren Zusatzstoff (Beize 0) führt bereits zu sehr niedrigen Staubwerten von 0,7 g pro 100 kg Saatgut. Häufig werden Staubwerte von über 1 g pro 100 kg Saatgut oder sogar 2 g pro 100 kg Saatgut gefunden. Durch die Zusatzstoffe der Beispiele 1 bis 5 kann der Staubwert weiter gesenkt werden. Diese Zusatzstoffe eignen sich also alle als Antistaubmittel. Bei den untersuchten polyethermodifizierten Siloxanen (Beispiele 1 bis 3) ist zu beobachten, dass die Staubentwicklung umso geringer ist, je mehr Siliziumatome das polyethermodifizierte Siloxan aufweist. Das polyethermodifizierte Siloxan mit der höchsten Zahl an Siliziumatomen (Beispiel 1) zeigt entsprechend den niedrigsten Staubwert. Die polyethermodifizierten Siloxane haben weiterhin den Vorteil, dass die Mischtrommel des Beizgerätes ohne Probleme mit Wasser zu reinigen ist, also alle Reste der Beize einfach zu entfernen sind. Die Beispiele 4 und 5, die auf Silikonölemulsionen basieren, bereiten hierbei dagegen Schwierigkeiten, da das enthaltene Silikonöl zu klebrigen und schwer zu lösenden Rückständen führt.

## Patentansprüche

1. Verwendung von mindestens einem polyethermodifizierten Siloxan als Staubbindemittel für Saatgut.

2. Verwendung nach Anspruch 1, **dadurch gekennzeichnet, dass** das mindestens eine polyethermodifizierte Siloxan 41 bis 81, vorzugsweise 43 bis 75, insbesondere 45 bis 70 Siliziumatome aufweist.

3. Verwendung nach mindestens einem der Ansprüche 1 bis 2, **dadurch gekennzeichnet, dass** das mindestens eine polyethermodifizierte Siloxan eine Verbindung der allgemeinen Formel

   (I) ist,

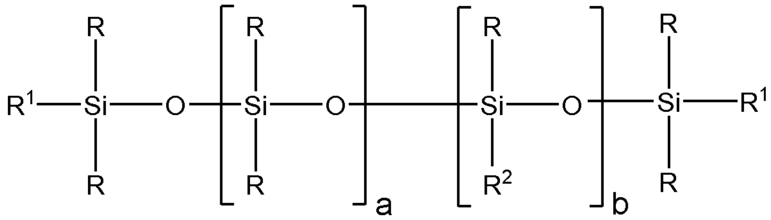

Formel (I);

wobei gilt:

R ist jeweils unabhängig voneinander ausgewählt aus der Gruppe bestehend aus einbindigen Kohlenwasserstoffresten mit 1 bis 18 Kohlenstoffatomen, vorzugsweise jeweils unabhängig voneinander ausgewählt aus der Gruppe bestehend aus Methyl, Ethyl, Propyl und Phenyl, insbesondere Methyl;

$R^1$ ist jeweils unabhängig voneinander ausgewählt ist aus der Gruppe bestehend aus R und $R^2$, vorzugsweise R, insbesondere Methyl;
$R^2$ ist jeweils unabhängig voneinander ausgewählt aus der Gruppe bestehend aus einbindigen Polyetherresten der allgemeinen Formel (II), $-Z[(OC_2H_3R^3)_cOR^4]_d$ Formel (II);
Z ist jeweils unabhängig voneinander ausgewählt aus der Gruppe bestehend aus, gegebenenfalls von Sauerstoffatomen unterbrochenen, (d+1)-bindigen Kohlenwasserstoffresten mit 2 bis 10, vorzugsweise 3 bis 4, insbesondere 3 Kohlenstoffatomen;
$R^3$ ist jeweils unabhängig voneinander ausgewählt aus der Gruppe bestehend aus H und einbindigen Kohlenwasserstoffresten mit 1 bis 8 Kohlenstoffatomen, vorzugsweise jeweils unabhängig voneinander ausgewählt aus der Gruppe bestehend aus H, Methyl, Ethyl und Phenyl, insbesondere jeweils unabhängig voneinander ausgewählt aus der Gruppe bestehend aus H und Methyl;
$R^4$ ist jeweils unabhängig voneinander ausgewählt aus der Gruppe bestehend aus H, einbindigen Kohlenwasserstoffresten mit 1 bis 8 Kohlenstoffatomen und Acylresten mit 1 bis 8 Kohlenstoffatomen, vorzugsweise jeweils unabhängig voneinander ausgewählt aus der Gruppe bestehend aus H, Methyl und Acetyl, insbesondere H;
a = 31 bis 74, vorzugsweise 33 bis 70, insbesondere 35 bis 60;
b = 6 bis 50, vorzugsweise 6 bis 30, insbesondere 6 bis 15;
c = 3 bis 100, vorzugsweise 5 bis 50, insbesondere 10 bis 30;
d = 1 bis 3, vorzugsweise 1 bis 2, insbesondere 1.

**4.** Verwendung nach Anspruch 3, **dadurch gekennzeichnet, dass** gilt:

R = Methyl,
$Z = -CH_2CH_2CH_2-$,
$R^4 = H$,
d =1.

**5.** Verwendung nach mindestens einem der Ansprüche 3 bis 4, **dadurch gekennzeichnet, dass** die zweibindigen Polyetherreste $(OC_2H_3R^3)_c$ jeweils unabhängig voneinander ausgewählt sind aus Resten der allgemeinen Formel (III),

$$(OC_2H_4)_{c(1)}(OC_3H_6)_{c(2)}(OC_4H_8)_{c(3)}(OC_2H_3Ph)_{c(4)} \quad \text{Formel (III)},$$

worin:

Ph Phenyl ist;
mit: c(1) = 1 bis 100, vorzugsweise 4 bis 50, insbesondere 8 bis 30;
c(2) = 0 bis 70, vorzugsweise 1 bis 40, insbesondere 3 bis 20;
c(3) = 0 bis 5, vorzugsweise 0 bis 2, insbesondere 0;
c(4) = 0 bis 5; vorzugsweise 0 bis 2, insbesondere 0;

mit der Maßgabe, dass gilt:

$$c(1)+c(2)+c(3)+c(4) = c.$$

**6.** Verwendung nach Anspruch 5, **dadurch gekennzeichnet, dass** gilt: c(3) = c(4) = 0.

**7.** Verwendung nach mindestens einem der Ansprüche 5 bis 6, **dadurch gekennzeichnet, dass** gilt: c(1)/(c(2)+c(3)+c(4)) = 0,5 bis 20, vorzugsweise 0,6 bis 10, insbesondere 0,8 bis 6.

**8.** Verwendung nach mindestens einem der Ansprüche 3 bis 7, **dadurch gekennzeichnet, dass** der Massenanteil an Oxyethylengruppen $(OC_2H_4)$ bezogen auf die Gesamtmasse aller Gruppen $(OC_2H_3R^3)$ von 35% bis 95%, vorzugsweise von 40% bis 90%, insbesondere von 45% bis 85% beträgt.

**9.** Verwendung nach mindestens einem der Ansprüche 3 bis 8, **dadurch gekennzeichnet, dass** das zahlenmittlere Molekulargewicht von $R^2$ von 200 g/mol bis 2500 g/mol, vorzugsweise von 400 g/mol bis 2000 g/mol, insbesondere von 500 g/ml bis 1500 g/mol beträgt.

**10.** Verwendung nach mindestens einem der Ansprüche 1 bis 9, **dadurch gekennzeichnet, dass** das mindestens eine polyethermodifizierte Siloxan einen Cloudpoint von mindestens 30 °C aufweist.

**11.** Verwendung nach mindestens einem der Ansprüche 1 bis 10, **dadurch gekennzeichnet, dass** der Massenanteil des mindestens einen polyethermodifizierten Siloxans bezogen auf die Gesamtmasse des behandelten Saatguts von 0,001 ppm bis 1000 ppm, vorzugsweise 0,01 ppm bis 100 ppm, insbesondere 0,1 ppm bis 10 ppm beträgt.

**12.** Verwendung nach mindestens einem der Ansprüche 1 bis 11, **dadurch gekennzeichnet, dass** das Saatgut ausgewählt ist aus der Gruppe bestehend aus Körnerfrüchten von Süßgräsern, vorzugsweise ausgewählt aus der Gruppe bestehend aus den Körnerfrüchten von Weizen, Roggen, Gerste, Hafer, Triticale, Reis, Mais und Hirse.

**13.** Verfahren zur Verringerung der Staubentwicklung von Saatgut unter Verwendung von mindestens einem polyethermodifizierten Siloxan gemäß den Vorgaben aus mindestens einem der Ansprüche 1 bis 12, umfassend die Schritte:

a. Bereitstellen des Saatguts,
b. Behandlung des Saatguts mit dem mindestens einen polyethermodifizierten Siloxan.

## Claims

**1.** Use of at least one polyether-modified siloxane as dust binder for seed.

**2.** Use according to Claim 1, **characterized in that** the at least one polyether-modified siloxane has 41 to 81, preferably 43 to 75 and especially 45 to 70 silicon atoms.

**3.** Use according to at least one of Claims 1 to 2, **characterized in that** the at least one polyether-modified siloxane is a compound of the general formula (I)

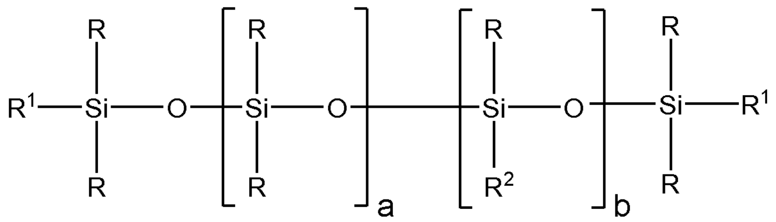

Formula (I);

where:

R is in each case independently selected from the group consisting of monovalent hydrocarbyl radicals having 1 to 18 carbon atoms, preferably in each case independently selected from the group consisting of methyl, ethyl, propyl and phenyl, especially methyl;
$R^1$ is in each case independently selected from the group consisting of R and $R^2$, preferably R, especially methyl;
$R^2$ is in each case independently selected from the group consisting of monovalent polyether radicals of the general formula (II) $-Z\,[(OC_2H_3R^3)_c OR^4]_d$ Formula (II);
Z is in each case independently selected from the group consisting of (d+1)-valent hydrocarbyl radicals that are optionally interrupted by oxygen atoms and have 2 to 10, preferably 3 to 4 and especially 3 carbon atoms;
$R^3$ is in each case independently selected from the group consisting of H and monovalent hydrocarbyl radicals having 1 to 8 carbon atoms, preferably in each case independently selected from the group consisting of H, methyl, ethyl and phenyl, especially in each case independently selected from the group consisting of H and methyl;
$R^4$ is in each case independently selected from the group consisting of H, monovalent hydrocarbyl radicals having 1 to 8 carbon atoms and acyl radicals having 1 to 8 carbon atoms, preferably in each case independently selected from the group consisting of H, methyl and acetyl, especially H;
a = 31 to 74, preferably 33 to 70, especially 35 to 60;

$b$ = 6 to 50, preferably 6 to 30, especially 6 to 15;
$c$ = 3 to 100, preferably 5 to 50, especially 10 to 30;
$d$ = 1 to 3, preferably 1 to 2, especially 1.

**4.** Use according to Claim 3, **characterized in that**:

R = methyl,
Z = $-CH_2CH_2CH_2-$,
$R^4$ = H,
$d$ = 1.

**5.** Use according to at least one of Claims 3 to 4, **characterized in that** the divalent polyether radicals $(OC_2H_3R^3)_c$ are each independently selected from radicals of the general formula (III)

$$(OC_2H_4)_{c(1)}(OC_3H_6)_{c(2)}(OC_4H_8)_{c(3)}(OC_2H_3Ph)_{c(4)} \qquad \text{Formula (III)}$$

in which:

Ph is phenyl;
with:

$c(1)$ = 1 to 100, preferably 4 to 50, especially 8 to 30;
$c(2)$ = 0 to 70, preferably 1 to 40, especially 3 to 20;
$c(3)$ = 0 to 5, preferably 0 to 2, especially 0;
$c(4)$ = 0 to 5, preferably 0 to 2, especially 0;

with the proviso that:

$$c(1)+c(2)+c(3)+c(4) = c.$$

**6.** Use according to Claim 5, **characterized in that**: $c(3) = c(4) = 0$.

**7.** Use according to at least one of Claims 5 to 6, **characterized in that**: $c(1)/(c(2)+c(3)+c(4))$ = 0.5 to 20, preferably 0.6 to 10, especially 0.8 to 6.

**8.** Use according to at least one of Claims 3 to 7, **characterized in that** the proportion by mass of oxyethylene groups $(OC_2H_4)$ based on the total mass of all $(OC_2H_3R^3)$ groups is from 35% to 95%, preferably from 40% to 90%, especially from 45% to 85%.

**9.** Use according to at least one of Claims 3 to 8, **characterized in that** the number-average molecular weight of $R^2$ is from 200 g/mol to 2500 g/mol, preferably from 400 g/mol to 2000 g/mol, especially from 500 g/mol to 1500 g/mol.

**10.** Use according to at least one of Claims 1 to 9, **characterized in that** the at least one polyether-modified siloxane has a cloud point of at least 30°C.

**11.** Use according to at least one of Claims 1 to 10, **characterized in that** the proportion by mass of the at least one polyether-modified siloxane based on the total mass of the treated seed is from 0.001 ppm to 1000 ppm, preferably 0.01 ppm to 100 ppm, especially 0.1 ppm to 10 ppm.

**12.** Use according to at least one of Claims 1 to 11, **characterized in that** the seed is selected from the group consisting of grains from the grass family, preferably selected from the group consisting of the grains of wheat, rye, barley, oats, triticale, rice, maize and millet/sorghum.

**13.** Method of reducing the evolution of dust from seed using at least one polyether-modified siloxane according to at least one of Claims 1 to 12, comprising the steps of:

a. providing the seed,

b. treating the seed with the at least one polyether-modified siloxane.

**Revendications**

1. **1.** Utilisation d'au moins un siloxane modifié par un polyéther en tant qu'agent liant les poussières pour des semences.

2. **2.** Utilisation selon la revendication 1, **caractérisée en ce que** l'au moins un siloxane modifié par un polyéther présente 41 à 81, de préférence 43 à 75, en particulier 45 à 70 atomes de silicium.

3. **3.** Utilisation selon au moins l'une des revendications 1 et 2, **caractérisée en ce que** l'au moins un siloxane modifié par un polyéther est un composé de formule générale (I)

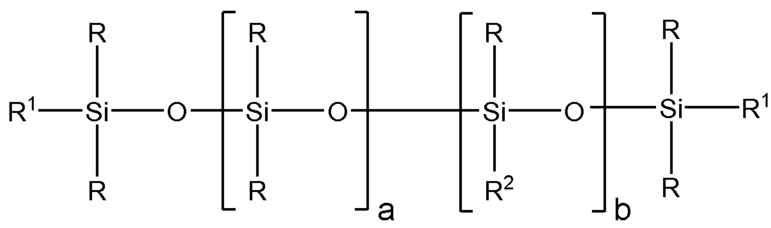

formule (I) ;

ceci s'appliquant :

R, à chaque fois indépendamment les uns des autres, étant choisi dans le groupe constitué par des radicaux hydrocarbonés monovalents comportant 1 à 18 atomes de carbone, de préférence à chaque fois choisi indépendamment les uns des autres dans le groupe constitué par méthyle, éthyle, propyle et phényle, en particulier méthyle ;
$R^1$, à chaque fois indépendamment les uns des autres, étant choisi dans le groupe constitué par R et $R^2$, de préférence R, en particulier méthyle ;
$R^2$, à chaque fois indépendamment les uns des autres, étant choisi dans le groupe constitué par des radicaux polyéther monovalents de formule générale (II), $-Z\ [(OC_2H_3R^3)_c OR^4]_d$ formule (II) ;
Z, à chaque fois indépendamment les uns des autres, étant choisi dans le groupe constitué par des radicaux hydrocarbonés (d+1)-valents éventuellement interrompus par des atomes d'oxygène comportant 2 à 10, de préférence 3 ou 4, en particulier 3 atomes de carbone ;
$R^3$, à chaque fois indépendamment les uns des autres, étant choisi dans le groupe constitué par H et des radicaux hydrocarbonés monovalents comportant 1 à 8 atomes de carbone, de préférence à chaque fois choisi indépendamment les uns des autres dans le groupe constitué par H, méthyle, éthyle et phényle, en particulier à chaque fois choisi indépendamment les uns des autres dans le groupe constitué par H et méthyle ;
$R^4$, à chaque fois indépendamment les uns des autres, étant choisi dans le groupe constitué par H, des radicaux hydrocarbonés monovalents comportant 1 à 8 atomes de carbone et des radicaux acyle comportant 1 à 8 atomes de carbone, de préférence à chaque fois choisi indépendamment les uns des autres dans le groupe constitué par H, méthyle et acétyle, en particulier H ;
a = 31 à 74, de préférence 33 à 70, en particulier 35 à 60 ;
b = 6 à 50, de préférence 6 à 30, en particulier 6 à 15;
c = 3 à 100, de préférence 5 à 50, en particulier 10 à 30 ;
d = 1 à 3, de préférence 1 à 2, en particulier 1.

4. **4.** Utilisation selon la revendication 3, **caractérisée en ce que** ceci s'applique :

R = méthyle,
$Z = -CH_2CH_2CH_2-$,
$R^4 = H$,
d = 1.

5. **5.** Utilisation selon au moins l'une des revendications 3 et 4, **caractérisée en ce que** les radicaux polyéther divalents $(OC_2H_3R^3)_c$ sont à chaque fois indépendamment les uns des autres choisis parmi des radicaux de la formule générale (III),

$$(OC_2H_4)_{c(1)}(OC_3H_6)_{c(2)}(OC_4H_8)_{c(3)}(OC_2H_3Ph)_{c(4)} \quad \text{formule (III)},$$

dans laquelle :

Ph est phényle ;
avec :
c(1) = 1 à 100, de préférence 4 à 50, en particulier 8 à 30 ;
c(2) = 0 à 70, de préférence 1 à 40, en particulier 3 à 20 ;
c(3) = 0 à 5, de préférence 0 à 2, en particulier 0 ;
c(4) = 0 à 5, de préférence 0 à 2, en particulier 0 ;
à la condition que ceci s'applique :

$$c(1)+c(2)+c(3)+c(4) = c.$$

**6.** Utilisation selon la revendication 5, **caractérisée en ce que** ceci s'applique : c(3) = c(4) = 0.

**7.** Utilisation selon au moins l'une des revendications 5 et 6, **caractérisée en ce que** ceci s'applique : c(1)/(c(2)+c(3)+c(4)) = 0,5 à 20, de préférence 0,6 à 10, en particulier 0,8 à 6.

**8.** Utilisation selon au moins l'une des revendications 3 à 7, **caractérisée en ce que** la proportion en masse de groupes oxyéthylène ($OC_2H_4$) par rapport à la masse totale de tous les groupes ($OC_2H_3R^3$) est de 35 % à 95 %, de préférence de 40 % à 90 %, en particulier de 45 % à 85 %.

**9.** Utilisation selon au moins l'une des revendications 3 à 8, **caractérisée en ce que** le poids moléculaire moyen en nombre de $R^2$ est de 200 g/mole à 2 500 g/mole, de préférence de 400 g/mole à 2 000 g/mole, en particulier de 500 g/mole à 1 500 g/mole.

**10.** Utilisation selon au moins l'une des revendications 1 à 9, **caractérisée en ce que** l'au moins un siloxane modifié par un polyéther présente un point de trouble d'au moins 30 °C.

**11.** Utilisation selon au moins l'une des revendications 1 à 10, **caractérisée en ce que** la proportion en masse de l'au moins un siloxane modifié par un polyéther par rapport à la masse totale des semences traitées est de 0,001 ppm à 1 000 ppm, de préférence de 0,01 ppm à 100 ppm, en particulier de 0,1 ppm à 10 ppm.

**12.** Utilisation selon au moins l'une des revendications 1 à 11, **caractérisée en ce que** les semences sont choisies dans le groupe constitué par des graines de graminées, de préférence choisies dans le groupe constitué par des graines de blé, de seigle, d'orge, d'avoine, de triticale, de riz, de maïs et de millet.

**13.** Procédé pour la diminution du dégagement de poussières de semences en utilisant au moins un siloxane modifié par un polyéther selon les exigences d'au moins une des revendications 1 à 12, comprenant les étapes de

a. mise à disposition des semences,
b. traitement des semences avec l'au moins un siloxane modifié par un polyéther.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2012168210 A
- US 7081436 B
- EP 3106033 A1
- EP 1520870 A
- EP 1439200 A
- EP 1544235 A
- US 4147847 A
- US 4025456 A
- EP 0493836 A
- US 4855379 A
- EP 1360223 A
- US 5877268 A
- US 5856369 A
- DE 19940797
- US 3957843 A
- US 4059605 A
- US 3507923 A
- DE 102005001076
- DE 3121929

### In der Beschreibung aufgeführte Nicht-Patentliteratur

- *CHEMICAL ABSTRACTS,* 63148-57-2